# EUROPÄISCHE PATENTANMELDUNG

(11) **EP 3 866 147 A1**
(43) Veröffentlichungstag der Anmeldung: **18.08.2021**
(21) Anmeldenummer: 21151112.6
(22) Anmeldetag: 12.01.2021
(51) Int. Cl.: G09F 13/04, G09F 13/08, G09F 21/04, B44F 1/06, B60Q 3/14, B60R 13/02

(54) **HINTERLEUCHTBARER DEKORMATERIALVERBUND, INSBESONDERE FÜR DEN INNENAUSBAU VON KRAFTFAHRZEUGEN**

(30) Priorität: 17.02.2020 DE 102020104078
(71) Anmelder: Eissmann Automotive Deutschland GmbH, 72574 Bad Urach (DE)
(72) Erfinder: EITEL, Norman, 72800 Eningen (DE); TOPP, Jennifer, 72793 Pfullingen (DE)
(74) Vertreter: Mammel und Maser

(57) **Zusammenfassung**

Hinterleuchtbarer Dekormaterialverbund, insbesondere für den Innenausbau von Kraftfahrzeugen Die Erfindung betrifft einen Dekormaterialverbund (10), insbesondere für den Innenausbau von Kraftfahrzeugen, umfassend ein flächiges Dekormaterial (11), das lichtdurchlässig ist und eine Sichtseite (14) und eine der Sichtseite (14) gegenüberliegende Rückseite (13) aufweist, wobei auf der Rückseite (13) des Dekormaterials (11) ein bedruckbarer Diffusor (20) angeordnet ist, wobei in einem Teilbereich auf der dem Dekormaterial (11) abgewandten Seite des Diffusors (20) eine wenigstens im Wesentlichen lichtundurchlässige Schicht (30) aufgebracht und insbesondere aufgedruckt ist, wobei die von der lichtundurchlässigen Schicht (30) ausgesparten Bereiche (31) Informationen, Muster oder Symbole darstellen, wobei der Dekormaterialverbund (10) dazu dient, mit einer Leuchtvorrichtung hinterleuchtet zu werden und einen Teil des Lichts der Leuchtvorrichtung durch die ausgesparten Bereiche (31) zur Sichtseite (14) des Dekormaterials (11) hindurchtreten zu lassen. Die vorliegende Erfindung betrifft auch dessen Verwendung und ein Herstellungsverfahren.

## Beschreibung

Die vorliegende Erfindung betrifft einen hinterleuchtbaren Dekormaterialverbund, insbesondere für den Innenausbau von Kraftfahrzeugen sowie ein Herstellungsverfahren für einen solchen Dekormaterialverbund.

Auf dem Gebiet der Innenausstattung von Fahrzeugen ist es üblich, Trägerteile wie Instrumententafeln, Türinnenverkleidungen, Fahrzeughimmel oder Mittelkonsolen mit flächigen Dekormaterialien wie Leder, Kunstleder, Alcantara, Dekorfolien, Textilien oder anderen Flächengebilden zu kaschieren. Häufig wird das flächige Dekormaterial nicht direkt auf das Trägerteil kaschiert, sondern zwischen Trägerteil und Dekormaterial ein Abstandsgewirke oder Schaumstoff vorgesehen, um einen ansprechenden haptischen Eindruck zu vermitteln.

Für die Verklebung der Schichten werden im Allgemeinen Lösemittel-, Dispersions- oder Hotmeltklebstoffe eingesetzt.

In den letzten Jahren hat sich ein Trend zu hinterleuchtbaren Flächen entwickelt. Hierbei wird grundsätzlich auf ein Trägermaterial ein Lichtleiter aufgebracht, der mit einer Lichtquelle wie einer LED-Lampe beleuchtet wird. Oberhalb des Lichtleiters ist eine wenigstens teilweise transparente Schicht vorgesehen. Im Nachtbetrieb, also wenn die Lichtquelle eingeschaltet ist, wird das Licht von der Lichtquelle durch den Lichtleiter geleitet und tritt dann an den für das Licht durchlässigen Stellen der teilweise transparenten Schicht durch diese Schicht hindurch und in den Kraftfahrzeuginnenraum. Um eine gleichmäßige räumliche Lichtverteilung zu erreichen, wird häufig zwischen dem Lichtleiter und der teilweise lichtdurchlässigen Schicht ein Diffusor vorgesehen.

Mit solchen hinterleuchteten oder hinterleuchtbaren Flächen kann, insbesondere bei Dunkelheit, eine ansprechende Grundbeleuchtung im Fahrzeuginnenraum erzielt werden, wobei die Lichtquelle bei Helligkeit nahezu unsichtbar ist.

Im Bereich der gehobenen Fahrzeuginnenausstattung besteht der Wunsch, Schaltflächen und Symbolik in Verkleidungsteilen bereitzustellen, die erst bei Bedarf sichtbar werden. Dies bedeutet, dass bei einem sogenannten "Tagdesign", bei dem das Dekormaterial nicht hinterleuchtet ist, der Betrachter nur die Oberfläche des Dekormaterials sieht. Im "Nachtdesign", sobald also das Dekormaterial hinterleuchtet wird, erscheint an der Sichtseite des Dekormaterials ein spezifisches Design, beispielsweise Schriftzüge oder Symbole, zum Beispiel zur Kenntlichmachung von Schaltflächen.

Aus der DE 10 2008 054 721 B3 ist ein Dekorverbund und ein Verfahren zur Herstellung eines Dekorverbunds mit einer Dekorschicht, der mit einer Perforation versehen ist, wobei Öffnungen in der Dekorschicht ausgebildet werden, und zumindest einer transparenten Deckschicht bekannt, wobei die Deckschicht zumindest einen Streuabschnitt aufweist, der den Streuungsgrad der Deckschicht lokal vergrößert.

Aus der DE 20 2016 100 258 U1 ist ein als Formteil ausgebildetes Dekorteil für einen Fahrzeuginnenraum mit einer von einer Kunststofffolie gebildeten Dekorschicht, an deren Rückseite ein Träger angeordnet ist, bekannt, wobei die Kunststofffolie zumindest einseitig eine lichtundurchlässige Drucklage mit mindestens einer Aussparung zur Lichtdurchführung aufweist.

Die DE 10 2015 220 853 A1 offenbart ein Flächenelement für ein Kraftfahrzeug.

Aus der DE 10 2008 041 701 A1 ist ein Dekorverbund bekannt, bei dem Perforationen in die Dekorschicht derart eingebracht sind, dass beispielsweise Linien, Ornamente oder Symbole dargestellt werden. Der Bereich mit den Perforationen kann hinterleuchtet werden, um die darzustellende Symbolik sichtbar zu machen.

Ein Nachteil besteht darin, dass das Dekormaterial, wenn eine Vielzahl von Perforationen zur Darstellung der Symbolik eingebracht werden, zunehmend an Stabilität verliert, so dass das Dekormaterial dazu neigt, sich zu verziehen oder sich der Bereich der Perforationen sichtbar abzeichnet. Zudem ist das entsprechende Herstellungsverfahren aufwendig.

Die Aufgabe der vorliegenden Erfindung besteht darin, einen hinterleuchtbaren Dekormaterialverbund bereitzustellen mittels dem eine Symbolik ohne Stabilitätsverlust darstellbar ist und der ansprechend und einfach in der industriellen Serienfertigung herstellbar ist. Ebenfalls ist Aufgabe der vorliegenden Erfindung, ein diesbezügliches Herstellungsverfahren anzugeben.

Diese Aufgabe wird durch die Merkmale des Anspruchs 1 und 8 gelöst.

Der erfindungsgemäße Dekormaterialverbund, insbesondere für den Innenausbau von Kraftfahrzeugen, umfasst ein flächiges Dekormaterial, das lichtdurchlässig ist und eine Sichtseite und eine der Sichtseite gegenüberliegende Rückseite aufweist. Auf der Rückseite des Dekormaterials ist ein bedruckbarer Diffusor angeordnet, wobei in einem Teilbereich auf der dem Dekormaterial abgewandten Seite des Diffusors eine wenigstens im Wesentlichen lichtundurchlässige Schicht aufgebracht und insbesondere aufgedruckt ist. Die von der lichtundurchlässigen Schicht ausgesparten Bereiche stellen Informationen, Muster oder Symbole dar. Der Dekormaterialverbund dient dazu, mit einer Leuchtvorrichtung hinterleuchtet zu werden und einen Teil des Lichts der Leuchtvorrichtung durch die ausgesparten Bereiche zur Sichtseite des Dekormaterials hindurchtreten zu lassen.

Der Dekormaterialverbund ist mit einer Leuchtvorrichtung hinterleuchtbar, so dass ein Teil des Lichts der Leuchtvorrichtung durch den Dekormaterialverbund zur Sichtseite des Dekormaterials hindurchtreten kann.

Da auf der der Sichtseite des Dekormaterials abgewandten Seite des Dekormaterialverbunds in bestimmten Bereichen eine lichtundurchlässige Schicht vorgesehen ist, ist der Dekormaterialverbund nur in den nicht von der lichtundurchlässigen Schicht versehenen Bereichen lichtdurchlässig.

Durch die Anordnung des Diffusors auf der Rückseite des Dekormaterials wird Licht, das von der Sichtseite durch das teilweise lichtdurchlässige Dekormaterial dringt, zurückgestreut. Somit sind die Schichten, die unterhalb des Dekormaterials liegen, von der Sichtseite aus nicht sichtbar, sofern keine rückseitige Beleuchtung vorhanden ist.

Dadurch wird das Aussehen des Dekormaterials (ohne Hinterleuchtung) allein durch das Aussehen der Oberfläche des Dekormaterials selbst bestimmt. Handelt es sich beispielsweise um ein Textil, so ist von der Sichtseite aus betrachtet nur die Struktur des Textils erkennbar.

In diesem sogenannten Tagdesign, also ohne Durchleuchten des Dekormaterialverbunds, erscheint die Oberfläche des Dekormaterials von der Sichtseite aus betrachtet in den Materialeigenschaften des Dekormaterials.

Wird nun der Dekormaterialverbund, der entsprechend der gewünschten Symbole in bestimmten Bereichen mit der lichtundurchlässigen Schicht versehen ist, hinterleuchtet, dringt das Licht durch die ausgesparten Bereiche der lichtundurchlässigen Schicht. Dort, wo die lichtundurchlässige Schicht auf den Diffusor aufgebracht bzw. aufgedruckt ist, wird das Licht absorbiert. Somit erscheinen im Nachtdesign bei Hinterleuchtung die von der lichtundurchlässigen Schicht ausgesparten Bereiche hell.

In diesem sogenannten Nachtdesign erscheint die Oberfläche bzw. die Sichtseite des Dekormaterials in einem spezifischen, vom Tagdesign abweichenden Design, das durch die Anordnung der Bereiche der lichtundurchlässigen Schicht auf dem Diffusor bestimmt ist.

Wesentlich ist, dass die Leuchtvorrichtung hinter der in einem Teilbereich aufgebrachten lichtundurchlässigen Schicht angeordnet ist, da ansonsten ein erfindungsgemäßes Hinterleuchten nicht möglich ist.

Der Diffusor sorgt auch dafür, dass das Dekormaterial von seiner Rückseite mit diffusem Licht beleuchtet wird. Insbesondere kann somit gewährleistet werden, dass die Symbole des Nachtdesigns in einem großen Winkelbereich gut erkennbar sind.

Erfindungsgemäß ist der Diffusor bedruckbar, damit auf seiner dem Dekormaterial abgewandten Seite in den für die Symbole erforderlichen Bereichen die lichtundurchlässige Schicht aufgebracht werden kann. Dies bedeutet, dass der Diffusor als Träger für Druckfarben bzw. Pigmente dienen kann. Gleichzeitig verhindert der Diffusor, dass die Druckfarben bzw. Pigmente in die Dekorschicht eindringen können. Bedruckbar bedeutet auch, dass die Druckfarben bzw. Pigmente fest auf dem Diffusor haften, also sich nicht während des bestimmungsgemäßen Gebrauchs ablösen können.

Als Diffusor kann eine lichtstreuende Folie oder ein lichtstreuender Klebefilm Anwendung finden.

In einer weiteren Variante wird der Diffusor aus einer transparenten Folie oder einem transparenten Klebefilm durch im Wesentlichen vollflächige Bedruckung mit einer Diffusorschicht, beispielsweise einer Farbe, hergestellt. Im Wesentlichen vollflächig bedeutet, dass überall, wo Licht hindurchtreten soll, auch die Diffusorschicht aufgetragen ist. Randbereiche, die beispielsweise durch andere Bauteile verdeckt sind, können ausgespart sein.

Diese Variante ist vorteilhaft, da herkömmliche Folien bzw. Klebefilme verwendet werden können und die Farbe der Diffusorschicht individuell wählbar ist und somit die Diffusorschicht kostengünstig hergestellt werden kann.

In beiden Varianten kann der Diffusor weiß oder hell oder farbig oder vorzugsweise in etwa in derselben Farbe wie das Dekormaterial sein.

Im Rahmen dieser Erfindung werden auch Weiß und Schwarz als "farbig" bzw. "Farbe" bezeichnet.

Die Folie kann eine übliche Folie mit einer Klebebeschichtung oder eine Schmelzklebefolie, insbesondere auf der Basis von Polyurethan auf Ester-Basis, oder ein thermoplastischer Klebefilm sein. Wesentlich ist jedoch, dass die Folie bedruckbar ist.

Das Dekormaterial ist ein flächiges weiches Material wie Leder, Kunstleder, Kunststoff, Alcantara oder eine Dekorfolie. Insbesondere ist das Dekormaterial ein textiles Material.

Das Dekormaterial ist lichtdurchlässig. Als "lichtdurchlässig" wird erfindungsgemäß jedes Material verstanden, das Licht aus der Leuchtvorrichtung zumindest teilweise hindurchtreten lassen kann. Beispielsweise kann es sich auch bei perforiertem Leder um ein lichtdurchlässiges Material handeln.

Besonders bevorzugt werden als Dekormaterial textile Stoffe eingesetzt. Vorteilhafterweise müssen Textilien aufgrund der Maschenweite nicht zusätzlich perforiert werden. Somit können zusätzliche Arbeitsschritte entfallen und Kosten eingespart werden.

Bevorzugt werden Textilien, die eng gewebt, eng gestrickt oder eng gewirkt sind.

Ein weiterer Vorteil von Textilien besteht darin, dass sowohl durch die Dicke des Textils als auch durch die Maschenweite die Lichtdurchlässigkeit des Dekormaterials eingestellt werden kann.

Je enger die Maschenweite ist, desto schärfer werden die Konturen der Symbole im Nachtdesign auf der Sichtseite des Dekormaterials abgebildet.

Die Schichtdicke des Dekormaterials liegt vorzugsweise zwischen 0,5 mm und 2,5 mm und besonders bevorzugt zwischen 0,8 mm und 1,5 mm.

Die lichtundurchlässige Schicht wird in einem Teilbereich auf die Seite des Diffusors aufgedruckt, die dem Dekormaterial abgewandt ist. Hierzu können sämtliche geeigneten Druckverfahren angewandt werden, wie zum Beispiel Laserdruck, Tintenstrahldruck, Siebdruck oder Digitaldruck.

Erfindungsgemäß wird die lichtundurchlässige Schicht nicht vollflächig, sondern nur in einem Teilbereich auf den Diffusor aufgebracht, da sonst keine Symbole darstellbar wären.

Im Folgenden wird die in einem Teilbereich auf der dem Dekormaterial abgewandten Seite des Diffusors aufgebrachte lichtundurchlässige Schicht vereinfacht als bereichsweise lichtundurchlässige Schicht bezeichnet.

Vorzugsweise umfasst die bereichsweise lichtundurchlässige Schicht Druckfarben, Pigmente oder Metallpartikel. Vorzugsweise ist die lichtundurchlässige Schicht schwarz.

Besonders bevorzugt ist die bereichsweise lichtundurchlässige Schicht aus Toner, der üblicherweise Kunstharz, Pigmente, magnetisierbare Metalloxide und verschiedene Hilfsstoffe umfasst. Selbstverständlich sind auch andere Farbmittel für elektrostatische Druckverfahren geeignet.

Im Wesentlichen lichtundurchlässig bedeutet, dass das Licht, welches von der Leuchtvorrichtung bereitgestellt wird und auf die lichtundurchlässige Schicht auftrifft, von der lichtundurchlässigen Schicht soweit absorbiert wird, dass dieses Licht von der Sichtseite aus gesehen im Wesentlichen nicht mehr wahrnehmbar ist.

Die Bereiche, die nicht mit der lichtundurchlässigen Schicht bedruckt sind, stellen eine Information, ein Muster, ein Symbol oder Ähnliches dar. Das bedeutet, dass die ausgesparten Bereiche das Nachtdesign bestimmen.

Soll nun ein Symbol oder ein Buchstabe auf der Sichtseite des Dekormaterials im Nachtdesign sichtbar sein, so sind genau die Bereiche in Form dieses Symbols oder Buchstabens aus der lichtundurchlässige Schicht ausgespart bzw. diese Bereiche nicht bedruckt.

So wird das Licht, welches von der Leuchtvorrichtung bereitgestellt wird, nur in den auf den Diffusor aufgedruckten Bereichen von der lichtundurchlässigen Schicht absorbiert. In den ausgesparten Bereichen kann das Licht anschließend den Diffusor durchdringen und das diffuse Licht tritt von der Rückseite des Dekormaterials zur Sichtseite des Dekormaterials hindurch. Dort ist somit die Information im Nachtdesign sichtbar.

Beispielsweise werden als Informationen funktionelle Elemente wie Schaltflächen, Fahrerinformationen oder Warnhinweise und/oder Designelemente wie Schriftzüge, Logos oder Grafiken im Nachtdesign angezeigt.

Um gegebenenfalls Höhenunterschiede, die durch die Aussparungen in der bereichsweisen lichtundurchlässigen Schicht entstehen und von der Sichtseite optisch oder haptisch wahrnehmbar sein könnten, auszugleichen, kann auf dem Diffusor in den Bereichen, in denen keine lichtundurchlässige Schicht aufgebracht ist, eine Füllschicht vorgesehen sein.

Die Füllschicht ist lichtdurchlässig und wenigstens in den Bereichen auf den Diffusor aufgebracht, in denen die lichtundurchlässige Schicht ausgespart ist.

Die Füllschicht kann alternativ zusätzlich auch auf die bereichsweise lichtundurchlässige Schicht aufgetragen werden und zwar derart, dass die Füllschicht in die ausgesparten Bereiche eindringt und in den Bereichen, die ausgespart sind, in Kontakt mit dem Diffusor steht. Somit gleicht die Füllschicht Unebenheiten, die durch die ausgesparten Bereiche entstehen, aus.

Unterhalb, also auf der dem Dekormaterial abgewandten Seite, der bereichsweise lichtundurchlässigen Schicht bzw. der Füllschicht kann eine Haptikschicht angeordnet sein. Die Haptikschicht kann ein Schaumstoff oder ein Abstandsgewirke sein und ist vorzugsweise mit dem Dekormaterialverbund verklebt.

Unterhalb der Haptikschicht kann ein Träger vorgesehen sein.

Alternativ kann der Träger direkt auf die bereichsweise lichtundurchlässige Schicht und/oder die Füllschicht geklebt sein.

Als Material für den Träger kommen transparente oder halbtransparente Kunststoffe in Frage. Bevorzugt wird ein halbtransparenter Kunststoff verwendet.

Sofern die Leuchtvorrichtung auf der Rückseite der Haptikschicht bzw. dem Träger angeordnet ist, müssen die Haptikschicht bzw. Träger transparent sein.

Die Leuchtvorrichtung umfasst eine Lichtquelle wie beispielsweise eine LED-Lampe. Zudem kann die Leuchtvorrichtung auch einen Lichtleiter, beispielsweise aus Silikon oder einem Kunststoff, einen Lichtdiffusor und einen Reflektor umfassen.

Zur Herstellung eines erfindungsgemäßen hinterleuchtbaren Dekormaterialverbunds wird das flächige Dekormaterial mit einer Sichtseite und einer der Sichtseite gegenüberliegenden Rückseite bereitgestellt. Auf der Rückseite des Dekormaterials wird der bedruckbare Diffusor aufgebracht, insbesondere durch Verkleben. Anschließend wird bereichsweise eine wenigstens im Wesentlichen lichtundurchlässige Schicht auf den Diffusor aufgedruckt.

Die Erfindung wird nachfolgend anhand von Ausführungsbeispielen näher beschrieben.

Es zeigt:
Figur 1 eine schematische Schnittdarstellung des Dekormaterialverbunds,
Figur 2 den Dekormaterialverbund aus Figur 1 mit einer Haptikschicht und einem transparenten Träger,
Figur 3 eine Variante des erfindungsgemäßen Dekormaterialverbunds,
Figur 4 eine schematische Schnittdarstellung des Dekormaterialverbunds mit Füllschicht,
Figur 5 eine Variante der Ausführungsform gemäß Figur 4 und
Figur 6 eine schematische Ansicht der Sichtseite im Tagdesign und im Nachtdesign.

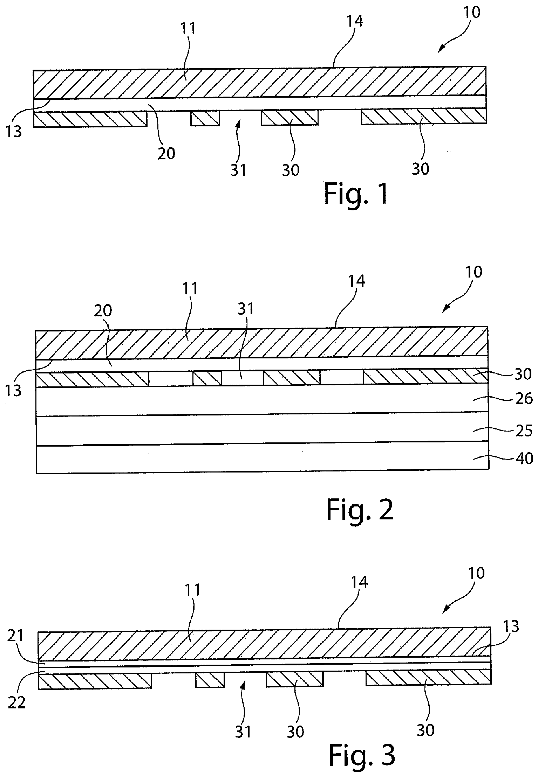

Der Dekormaterialverbund 10 in Figur 1 bis 5 weist mit der Sichtseite 14 des Dekormaterials 11 nach oben in den Fahrzeuginnenraum.

In einem ersten Ausführungsbeispiel gemäß Figur 1 ist das Dekormaterial 11 mit seiner Rückseite 13 mit dem Diffusor 20 vollflächig verklebt. Der Diffusor 20 ist eine weiße Folie, die auf die Rückseite 13 des Dekormaterials 11 aufgeklebt ist.

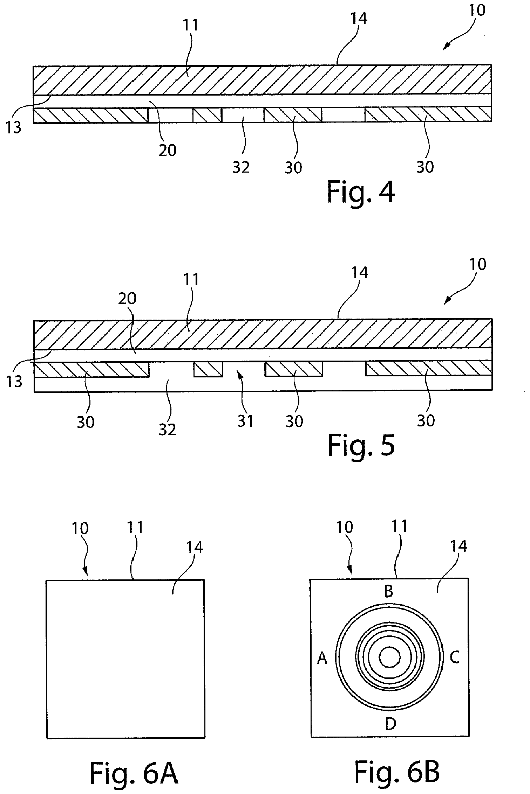

Auf die Rückseite des Diffusors 20 ist in Teilbereichen die lichtundurchlässige Schicht 30 aufgedruckt. Dabei werden Bereiche 31 ausgespart, die bei Durchleuchtung, also im Nachtdesign, auf der Sichtseite 14 als Information sichtbar sind (vgl. Figur 6).

In diesem Ausführungsbeispiel besteht die bereichsweise lichtundurchlässige Schicht 30 aus Toner. Die bereichsweise lichtundurchlässige Schicht 30 kann jedoch auch mit anderen Druckverfahren aufgetragen werden. In solchen Fällen besteht die bereichsweise lichtundurchlässige Schicht 30 dann aus den in diesen Druckverfahren verwendeten Druckfarben.

In dem Ausführungsbeispiel gemäß Figur 2 ist der Dekormaterialverbund 10 mit der dem Dekormaterial 11 abgewandte Seite der bereichsweisen lichtundurchlässigen Schicht 30 mit einer Haptikschicht 26 verklebt. Die Haptikschicht 26 ist entweder ein Abstandsgewirke oder ein Schaumstoff. Dieser Verbund kann dann über die Unterseite der Haptikschicht 26 mit einem Träger 25, beispielsweise einer Türverkleidung, verklebt werden. Selbstverständlich kann auch zunächst die Haptikschicht 26 mit dem Träger 25 verklebt und dann auf den Dekormaterialverbund 10 aufgeklebt werden. Ebenfalls kann bei dem Schichtaufbau auch die Haptikschicht 26 weggelassen werden und der Dekormaterialverbund 10 direkt auf den Träger 25 aufgebracht werden.

Hinter dem Träger 25 ist eine Leuchtvorrichtung 40 angeordnet.

Die Haptikschicht 26 und der Träger 25 sind lichtdurchlässig.

In einer Variante, dargestellt in Figur 3, ist der Diffusor 20 zweiteilig. Der Diffusor 20 umfasst eine transparente Folie 21, die vollflächig auf das Dekormaterial 11 geklebt und mit einer Farbschicht 22 bedruckt ist. Hierzu können die üblichen Druckverfahren eingesetzt werden wie beispielsweise Laserdruck oder Tintenstrahldruck. Wird Laserdruck verwendet, so ist die Farbschicht 22 eine Schicht aus Toner.

Die Farbschicht 22 ist weiß, so dass von der Sichtseite 14 des Dekormaterials 11 aus einfallendes Licht gestreut wird. Licht, das von der Leuchtvorrichtung 40 (in Figur 3 nicht dargestellt), welche unterhalb der bereichsweise lichtundurchlässigen Schicht 30 angeordnet ist, durch die ausgesparten Bereiche 31 zu der Farbschicht 22 gelangt, wird durch die Farbschicht 22 teilweise gestreut. Ein Großteil des Lichtes gelangt durch die Folie 21 und das Dekormaterial 11 zur Sichtseite 14.

Der gleiche Effekt wird auch durch den einteiligen Diffusor 20 aus dem ersten Ausführungsbeispiel erzielt.

In einer weiteren Variante sind die ausgesparten Bereiche 31 mit einer transparenten Füllschicht 32 aufgefüllt (Figur 4). Dabei kann es sich beispielsweise um Druckfarben, Lack oder eine Folie handeln. Die Füllschicht 32 ist jedoch optional und kann eingesetzt werden, um Abzeichnungen der ausgesparten Bereiche 31 aufgrund des Höhenunterschieds zu vermeiden.

Alternativ kann sich die transparente Füllschicht 32 vollflächig über die lichtundurchlässige Schicht 30 und in die ausgesparten Bereiche 31 erstrecken (Figur 5).

Wird kein Licht durch die Leuchtvorrichtung 40 bereitgestellt, so wird das Umgebungslicht, welches von der Sichtseite 14 aus durch das Dekormaterial 11 dringt, durch den Diffusor 20 gestreut. Dies führt dazu, dass die unterhalb des Diffusors 20 liegenden Schichten von der Sichtseite 14 aus nicht sichtbar sind. Ein Betrachter, beispielsweise ein Insasse in einem Fahrzeug, sieht in diesem "Tagdesign" nur die Oberfläche des Dekormaterials 11, wie in Fig. 6A dargestellt. Das Tagdesign ist somit durch die Oberflächeneigenschaften des Dekormaterials 11 bestimmt.

Wird nun die Leuchtvorrichtung 40 eingeschaltet, so kann das bereitgestellte Licht durch die ausgesparten Bereiche 31 der lichtundurchlässigen Schicht 30 treten. Es gelangt durch den Diffusor 20, wird diffus gestreut und tritt durch das Dekormaterial 11 zur Sichtseite 14. Nun ist von einem Betrachter das "Nachtdesign" auf der Sichtseite 14 sichtbar (Fig. 6B). Auf der Sichtseite 14 erscheinen Symbole, Schriftzüge oder Schaltflächen. Diese durchleuchteten Flächen leuchten und entsprechen in ihrer Form genau der Form der ausgesparten Bereiche 31.

## Patentansprüche

1. Dekormaterialverbund (10), insbesondere für den Innenausbau von Kraftfahrzeugen, umfassend ein flächiges Dekormaterial (11), das lichtdurchlässig ist und eine Sichtseite (14) und eine der Sichtseite (14) gegenüberliegende Rückseite (13) aufweist, wobei auf der Rückseite (13) des Dekormaterials (11) ein Diffusor (20) angeordnet ist, wobei der Diffusor (20) eine transparente Folie oder ein transparenter Klebefilm ist, die/der im Wesentlichen vollflächig mit einer Diffusorschicht (22) bedruckt ist, wobei in einem Teilbereich auf der dem Dekormaterial (11) abgewandten Seite des Diffusors (20) eine wenigstens im Wesentlichen lichtundurchlässige Schicht (30) aufgebracht und insbesondere aufgedruckt ist, wobei die von der lichtundurchlässigen Schicht (30) ausgesparten Bereiche (31) Informationen, Muster oder Symbole darstellen, wobei der Dekormaterialverbund (10) dazu dient, mit einer Leuchtvorrichtung (40) hinterleuchtet zu werden und einen Teil des Lichts der Leuchtvorrichtung (40) durch die ausgesparten Bereiche (31) zur Sichtseite (14) des Dekormaterials (11) hindurchtreten zu lassen.

2. Dekormaterialverbund (10) nach Anspruch 1, **dadurch gekennzeichnet, dass** der Diffusor (20) eine lichtstreuende Folie oder ein lichtstreuender Klebefilm ist, die/der weiß oder hell oder farbig oder in etwa in derselben Farbe wie das Dekormaterial (11) ist, oder eine transparente Folie (21) oder ein transparenter Klebefilm ist, die/der mit einer Farbschicht (22) bedruckt ist, die weiß oder hell oder in etwa in derselben Farbe wie das Dekormaterial (11) ist.

3. Dekormaterialverbund (10) nach Anspruch 1 oder 2, **dadurch gekennzeichnet, dass** das Dekormaterial (11) ein weiches Dekormaterial und bevorzugt Leder, Kunstleder, Alcantara, Kunststoff oder eine Dekorfolie und besonders bevorzugt ein Textil ist.

4. Dekormaterialverbund (10) nach einem der vorangegangenen Ansprüche, **dadurch gekennzeichnet, dass** die lichtundurchlässige Schicht (30) Druckfarbe und/oder Pigmente und/oder Metallpartikel umfasst und/oder schwarz ist.

5. Dekormaterialverbund (10) nach einem der vorangegangenen Ansprüche, **dadurch gekennzeichnet, dass** auf dem Diffusor (20) wenigstens in den Bereichen, in denen keine lichtundurchlässige Schicht (30) aufgebracht ist, eine Füllschicht (32) aufgebracht ist.

6. Dekormaterialverbund (10) nach einem der vorangegangenen Ansprüche, **dadurch gekennzeichnet, dass** der Dekormaterialverbund (10) mit seiner dem Dekormaterial (11) abgewandten Seite der lichtundurchlässigen Schicht (30) und ggf. der Füllschicht (32) mit einer Haptikschicht (26) verklebt ist.

7. Dekormaterialverbund (10) nach einem der vorangegangenen Ansprüche, **dadurch gekennzeichnet, dass** unterhalb der lichtundurchlässigen Schicht (30) und/oder der Füllschicht (32) oder der Haptikschicht (26) ein transparenter Träger (25) angeordnet ist.

8. Verfahren zur Herstellung eines hinterleuchtbaren Dekormaterialverbunds (10), welches folgende Schritte umfasst:
a) Bereitstellen eines flächigen Dekormaterials (11) mit einer Sichtseite (14) und einer der Sichtseite (14) gegenüberliegenden Rückseite (13);
b) Aufbringen eines bedruckbaren Diffusors (20) auf die Rückseite (13) des Dekormaterials (11);
c) Aufdrucken einer wenigstens im Wesentlichen lichtundurchlässigen Schicht (30) auf einem Teilbereich auf der dem Dekormaterial (11) abgewandten Seite des Diffusors (20).

9. Verfahren nach Anspruch 8, **dadurch gekennzeichnet, dass** die bereichsweise lichtundurchlässige Schicht (30) mittels Laserdruck, Tintenstrahldruck, Siebdruck oder Digitaldruck aufgebracht wird.

10. Verwendung eines Dekormaterialverbunds (10) nach einem der Ansprüche 1 bis 7 als Innenausstattungsteil eines Fahrzeugs.
